# EUROPEAN PATENT SPECIFICATION

(11) **EP 1 989 037 B1**
(45) Date of publication and mention of the grant of the patent: **21.12.2011**
(21) Application number: 07704235.6
(22) Date of filing: 30.01.2007
(51) Int. Cl.: B29C 51/26, B29C 51/20, B29C 51/04, B29C 51/32

(54) **APPARATUS AND METHOD FOR THERMOFORMING CONTAINERS FROM PLASTIC FOILS**
VORRICHTUNG UND VERFAHREN ZUM WÄRMEFORMEN VON BEHÄLTERN AUS KUNSTSTOFFFOLIEN
APPAREIL ET PROCÉDÉ DE THERMOFORMAGE DE CONTENANTS

(30) Priority: 02.02.2006 IT MO20060036
(43) Date of publication of application: 12.11.2008
(60) Divisional application: 11169887.4
(73) Proprietor: SARONG S.p.A., I-42046 Reggiolo (Province of Reggio Emilia) (IT)
(72) Inventor: MINGHETTI, Bianca Elena, 19031 Ameglia (La Spezia) (IT)
(74) Representative: Crugnola, Pietro
(86) International application number: PCT/EP2007/050883
(87) International publication number: WO 2007/088161

(56) References cited:
- EP-A- 0 322 697
- WO-A-98/48995
- AU-B2- 640 375
- DE-A1- 10 113 524
- DE-A1- 19 741 838
- US-A- 3 816 585
- US-A- 4 209 957

## Description

The invention relates to apparatuses and methods for thermoforming containers, in particular containers having undercuts.

WO9848995 discloses a thermoformer comprising a pre-cut roll having a series of adjacent webs connected by a cut area, a heating station adapted to heat each of the webs and further comprising a forming station adapted to form each of the webs. The thermoformer further comprises a cutting station adapted to separate the webs from each other by making a cut along each of the cut areas connecting the webs.

US3816585 discloses a continuous motion container method molding machine provided with cooperating molds which operate upon heated thermoplastic sheet or web material to form disposable containers.

AU640375 discloses a thermoforming method and apparatus which enables the continuous feeding and thermoforming of a web of thermoplastic material into parts produced intermittently by the thermoforming apparatus.

DE10113524 discloses a biaxial film stretching equipment fcr a thermoforming machine having two conveyer belts, the second moving faster than the first and also moving apart perpendicular to the film. The film strip is stretched and heated in the longitudinal direction by two endless conveyer belts, one behind the other with a gap between them. Each conveyer has either needles, claws or prongs for gripping the film. The second conveyer belt moves at higher speed than the first belt. In a following thermoforming operation both parts of the second conveyer move apart causing the film to stretch in the transverse direction.

DE19741838 discloses a thermo-moulding unit for producing blisters in a band, comprising a heating and molding unit, and a pulling unit which pulls the band from a roll via a roller with cutouts for the blisters in the band.

CS4209957 discloses a process and heating arrangement for actuating and arresting a heat-forming machine for producing deep drawn containers made of thermoplastic foil band material. The foil band material is paid out in stepwise fashion from one or more storage rollers and is then processed along a process path along which there are arranged in downstream fashion: a heating arrangement, a molding arrangement, a filling arrangement, a stamping arrangement and a driving mechanism.

EP0322697 discloses a machine for manufacturing thermoformed articles. The machine uses a foamed thermoplastic material in sheets or a foamed material coupled with a synthetic or natural fabric prepared so as to form a band of adequate width. The band is moved step by step by a chain advancement system into a softening over so as to heat it until it reaches its molding temperature. After this heating in the oven, the band is moved to a forming station where it is shaped as required by molds. In a successive station the thermoformed article is cut with a die-cutter the blade whereof acts against a heated steel plate so that the foamed thermoplastic material and the fabric coupled therewith are mutually heat-welded simultaneously with their die-cutting.

Apparatuses are known for thermoforming containers having undercuts from a sheet material, the apparatuses comprising supporting means that supports a reel on which a continuous strip of this sheet material is wound, and moving means that indexes the sheet material on a plane in an advancing direction.

A heating station is provided in which the sheet material is heated, so as to reach a temperature near the softening temperature of the thermoformable material.

Downstream of the heating station a forming station is provided into which the sheet material that has just been heated is conducted to be shaped by punch means cooperating with die means.

The forming station comprises bell locking means that is movable towards and away from the die means that locks the sheet material on a resting surface of the die means so that forming can occur correctly.

In the die means a plurality of forming cavities is obtained in each of which a containing cavity of a container is defined.

The containing cavity of each container is delimited by walls that comprise undercuts and by an opening, through which the container is subsequently filled with a product. Forming fluid injecting means is provided that cooperates with the punch means in such a way as to press the portion of sheet material affected by the forming against the surfaces of each forming cavity.

The die means enables several containers to be moulded simultaneously, arranged along transverse rows with respect to the sheet material. The die means comprises a series of forming devices arranged adjacent to one another and aligned in directions that are transverse to the advancing direction of the sheet material. Each forming device interacts with the sheet material to shape a container. In this way several containers are formed simultaneously that are arranged on the same strip along rows that are transverse to the advancing direction of the sheet material.

Each forming device comprises movable mould portions, defining a single forming cavity that can move towards or away from one another in directions parallel to the advancing plane and perpendicular to the advancing direction of the sheet material. The forming devices are spaced apart from one another so that each mould portion can move transversely without interfering with a mould portion associated with an adjacent forming device. Once a container has been formed it is possible to disengage the latter from the respective forming cavity without there being impediments generated by the portions of container that are provided with undercuts.

Each newly moulded container can thus advance, suspended from the sheet material, in the advancing direction.

In this way a plurality of containers is obtained that are ready to be filled with a product in a filling station.

At the end of filling the containing cavities, the sheet material advances to a welding station. In the welding station, along the edges of the containing elements that have just been filled a film of thermoformable material is welded that acts as a closing element, or cover elements can be associated. Subsequently, the containers that have just been filled and welded are separated from the thermoformable sheet of material from which they have been obtained using suitable shearing means.

A drawback of the known apparatuses for thermoforming is that they do not enable the sheet material to be exploited in an efficient manner, thus generating a great quantity of waste. In particular, the forming devices require suitable transverse driving spaces that lead to having extensive portions of sheet material that are.not usable.

Another drawback of known apparatuses is that if containers of different shape are produced simultaneously with which different forming times are associated, it is not possible to fully exploit the productive capacity of the apparatus. The productivity of the apparatus in this case in fact depends on the types of containers that require longer forming times.

A further drawback of the known apparatuses is that they require driving devices of the mould portions that are structurally very complex. In particular, when the forming fluid is injected inside the forming cavity strong thrusts are generated that tend to move the mould portions away from one another. In order to counteract these thrusts and enable correct thermoformihg it is thus necessary to provide driving devices that are not only very bulky but are also very expensive.

A still further drawback of the known apparatuses is that they are not very versatile. If different types of container are thermoformed simultaneously it is not possible to decide a suitable level of productivity for each type of container in order to meet given production needs.

An object of the invention is to improve known methods and apparatuses for thermoforming containers.

Another object of the invention is to provide a method and an apparatus for thermoforming containers that enable the sheet material to be exploited very efficiently, minimising the waste thereof.

A further object of the invention is to provide an apparatus and a method that enable containers to be shaped in a faster and more precise manner.

A still further object of the invention is to provide a method and an apparatus for thermoforming containers that enable high productive capacity to be obtained, minimising the downtime that occurs when containers of different type are thermoformed simultaneously.

A still further object of the invention is to provide a very versatile apparatus for thermoforming containers that, if containers of different type have to be produced simultaneously, enables levels of productivity to be selected for each type of container independently of one another, according to given production needs.

A still further object of the invention is to provide an apparatus for thermoforming containers provided with driving devices of the mould portions that have reduced dimensions that are not costly and are structurally simplified.

In a first aspect of the invention, there is provided an apparatus as defined in claim 1.

In a second aspect of the invention, there is provided a method as defined in claim 22.

Owing to these aspects of the invention it is possible to thermoform containers, exploiting very efficiently the sheet material so as to minimise the waste thereof.

It is further possible to obtain high productive capacity, minimising the downtime that occurs when containers of different type have to be thermoformed in the same production cycle.

Owing to these aspects of the invention it is possible to thermoform containers in a very versatile manner, and if containers of different type have to be produced simultaneously it is possible to choose levels of productivity for each type of container independently of one another in function of given production needs. This also enables just one continuous longitudinal strip portion to be processed if it is desired to obtain just one of the types of container that it is possible to produced.

The invention can be better understood and implemented with reference to the attached drawings that illustrate some embodiments thereof by way of non-limitative example, in which:
Figure 1 is a perspective and fragmentary view that shows schematically an apparatus for thermoforming containers;
Figure 2 shows schematically from above a portion of the apparatus in Figure 1 in an operating configuration;
Figure 3 is a view like the one in Figure 2 that shows the apparatus in Figure 1 in another operating configuration;
Figure 4 is a cross section of the apparatus in Figure 2 taken along the plane IV-IV.
Figure 5 is an enlarged view of a portion of the apparatus shown in Figure 4.
Figure 6 is a fragmentary and partially sectioned view of an embodiment of the apparatus in an operating configuration;
Figure 7 is a view of the apparatus in Figure 6 in another operating configuration;
Figure 8 is a schematic view of another embodiment of the apparatus for thermoforming containers.

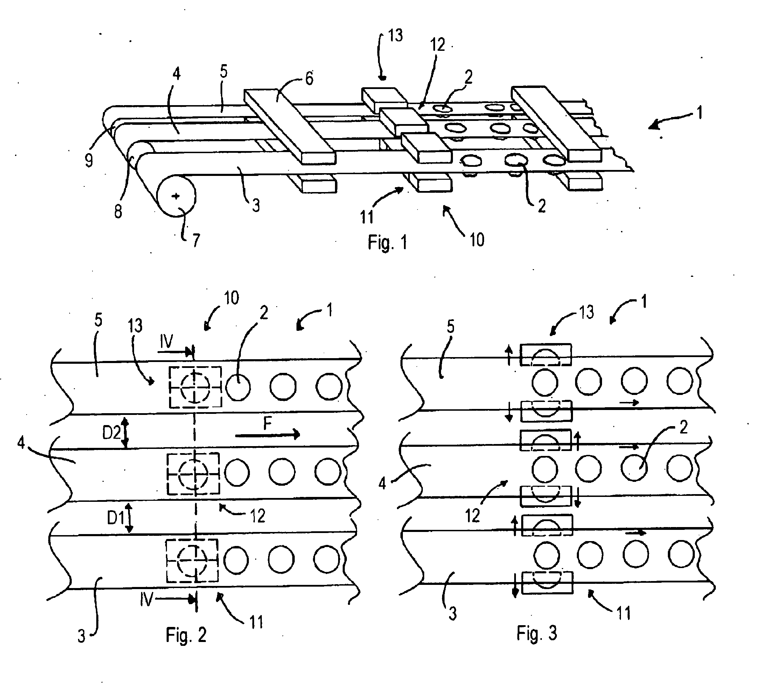

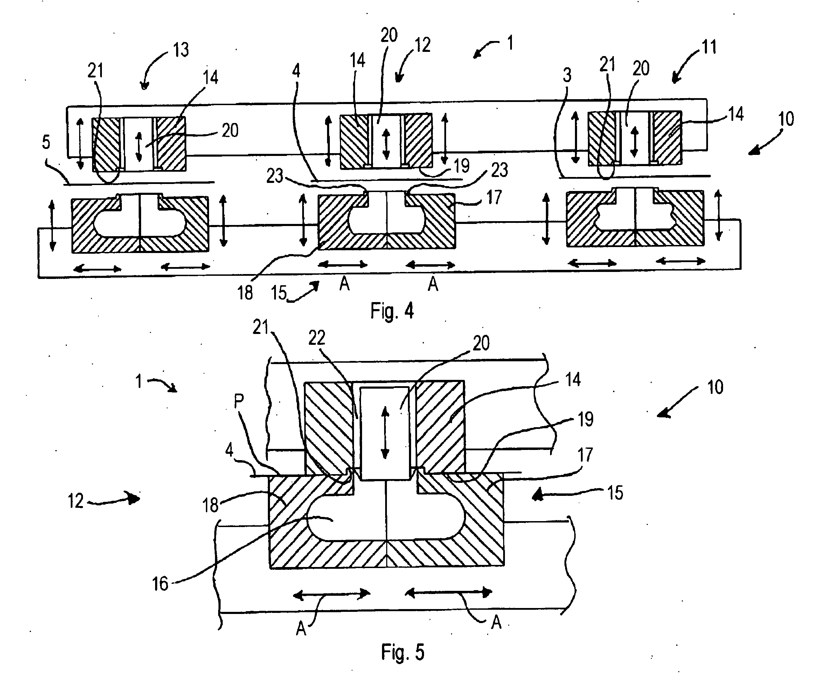

With reference to Figures 1 to 5, there is shown an apparatus 1 for thermoforming containers 2 from a sheet material. The sheet material comprises a plurality of continuous longitudinal strip portions that are distinct from one another that are unwound from respective reels using moving means (not shown). In particular, the moving means of the apparatus disclosed with reference to Figures 1 to 5 enables a first strip portion 3, a second strip portion 4 and a third strip portion 5 of sheet material to be moved that are unwound respectively from a first reel 7, from a second reel 8 and from a third reel 9, but it is also possible to provide a different number of strip portions in function of production needs.

The moving means enables the first strip portion 3, the second strip portion 4 and the third strip portion 5 to be indexed on a plane in an advancing direction F.

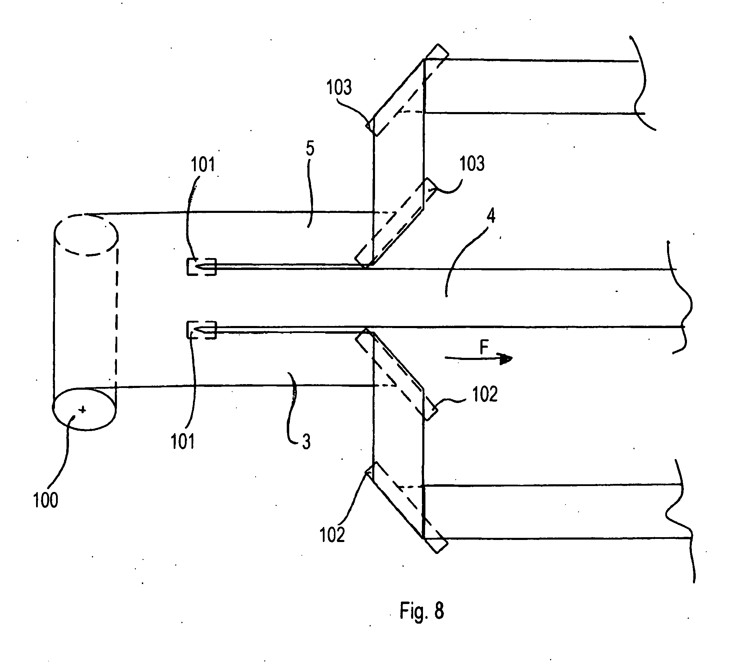

In an embodiment of the apparatus 1, shown in Figure 8, a sole reel 100 of sheet material is provided, from which several strip portions can be obtained. A cutting device is provided, comprising blade elements 101 that are used to cut the sheet material parallel to the advancing direction F, so as to obtain for example the first strip portion 3, the second strip portion 4 and the third strip portion 5. Return means is further provided that is arranged in such a way as to space the first strip portion 3, the second strip portion 4 and the third strip portion 5 apart from one another. The return means comprises, for example, first return rollers 102 that are used to divert the first strip portion 3 during advancing in such a way as to distance it from the second strip portion 4. The return means further comprises second return rollers 103 that divert the third strip portion 5 during advancing in such a way as to distance it from the second strip portion 4.

A heating station 6 is provided in which the sheet material, after advancing by a step, stops for a necessary time so that it can be heated to a softening temperature necessary for obtaining correct thermoforming.

Downstream of the heating station 6 a forming station 10 is arranged that provides for shaping the sheet material to obtain the containers 2.

The forming station 10 is shaped for processing the first strip portion 3, the second strip portion 4 and the third strip portion 5 separately and independently of one another. The forming station .10 comprises a forming device for each continuous longitudinal strip portion. In particular a first forming device 11, a second forming device 12, and a third forming device 13 are provided that are aligned transversely to the advancing direction F that are drivable independently of one another, and are arranged for interacting respectively with the first strip portion 3, the second strip portion 4 and the third strip portion 5. The aforementioned forming devices can be configured in such a way that each of them can shape a given type of container, thus obtaining production lines for different products. It is possible to regulate appropriately the speed of the thermoforming cycle for each production line in function of the thermoforming time required by a given type of container, thus reducing downtime. It is further possible to control the production speed of each line independently of the other lines to meet determined production needs. For example, it is also possible to use only one/two of the production lines and to deactivate the remaining production line/s.

As the aforementioned forming devices are structurally configured in a similar manner only the second forming device 12 will be disclosed below so as to simplify the description.

The second forming device 12 provides a die 15 comprising a forming cavity 16. The die 15 is configured in such a way as to shape a container 2 according to a determined shape having undercuts and to extract the latter therefrom once forming has terminated.

In particular, the die 15 comprises a first mould element 17 and a second mould element 18 that define the forming cavity 16 and are reciprocally movable in transverse directions A arranged transversely to the advancing direction F. In this way the first mould element 17 and the second mould element 18 enable the container 2 to be disengaged once the forming cavity 16 has been formed. There is provided a driving device (not shown) that drives the first mould element 17 and the second mould element 18 towards or away from one another by a quantity that is such as to enable the complete disengagement from the container 2 that has just be formed and so as not to interfere with adjacent mould elements associated respectively with the first forming device 11 and the third forming device 13. The latter are drivable by means of a further driving device and a still further driving device in a similar manner to what has been disclosed with reference to the second forming device 12. In order to enable the driving devices to correctly drive the mould elements a first distance D1 is provided that appropriately separates the first strip portion 3 from the second strip portion 4, and a second distance D2 that separates the latter from the third strip portion 5. This enables the sheet material to be exploited effectively. In particular the waste is avoided that would occur if the sheet material also affected the space regions necessary for avoiding interference between adjacent mould elements.

There is provided a locking element 14 that is movable perpendicularly to the advancing direction of the sheet material, which is used to lock the latter on resting surfaces P obtained on the die 15, in such a way as to enable forming of a container. A punch 20 is provided that is coaxial to the locking element 14 and is slidable along a through hole 22 of the latter that cooperates with the die 15 and with means for injecting a forming fluid for shaping the sheet material.

The locking element 14 is provided with an operating surface 19 arranged for interacting with the resting surfaces P.

On the operating surface 19 an abutting cavity 21 is obtained that surrounds the hole 22 and is configured for coupling with projecting portions 23 obtained on the first mould element 17 and on the second mould element 18. The projecting portions 23 are configured in such a way that, when the first mould element 17 and the second mould element. 18 are in reciprocal contact, they surround an opening zone of the forming cavity 16. Coupling of the projecting portions 23 with the abutting cavity 21 enables, during forming of a container, the first mould element 17 and the second mould element 18 to be kept joined together with great safety and precision and the sheet material to be locked with greater efficacy. This further enables the thrusts generated by the punch 20 and by the forming fluid on the mould elements to be better counteracted, and consequently enables the driving device to be structurally dimensioned, taking account of the reduction in the stress to which it is subjected during forming owing to coupling of the projecting portions 23 with the abutting cavity 21. Similarly to what has been disclosed with reference to the second forming device 12, also the first forming device 11 and the third forming device 13 are provided with respective locking elements, each of which can be driven independently of the others.

If it is desired to shape a container that in addition to the aforementioned undercuts comprises further undercuts associated with the bottom that would prevent the removal of the two mould elements from the container 2, it is possible to provide a die divided into three parts. In particular, this die may comprise two elements that are suitable for, defining side walls of the container and which are movable in relation to one another parallel to the advancing plane of the sheet material, and a third mould element suitable for defining a bottom of the container and perpendicularly movable away from the advancing plane of the sheet.

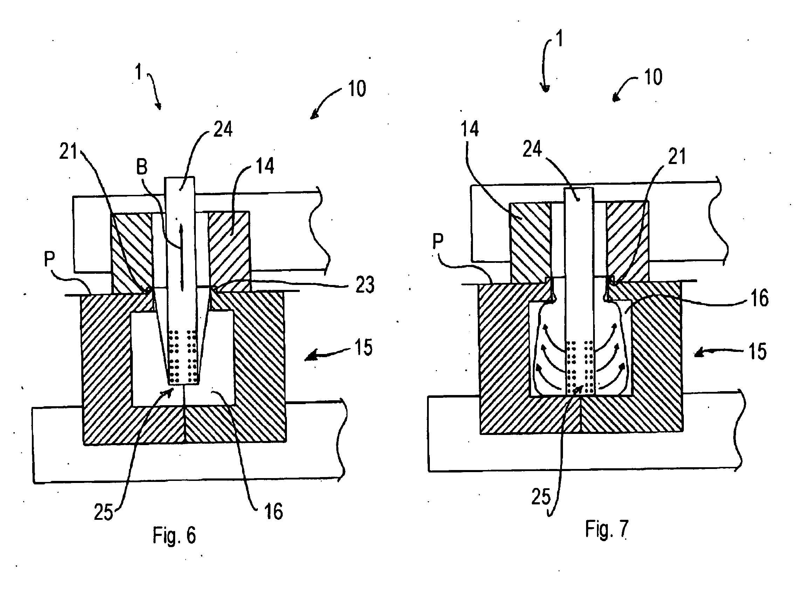

With reference to Figures 6 and 7, an embodiment of the apparatus 1 is shown that is provided with some parts that are common to the embodiment disclosed with reference to Figures 1 to 5 and indicated by the same reference number. The embodiment of the apparatus 1 shown in Figures 6 and 7 differs from the one in Figures 1 to 5 in what will be disclosed below.

Each forming device comprises a punch-injector 24 that is movable in a drawing direction B from a first position near an opening zone of the forming cavity 16, to a second position near a bottom zone of the forming cavity 16. The punch-injector 24 is internally hollow and is provided at an end arranged for interacting with the sheet material, with nozzles 25 that are used to inject inside the forming cavity a forming fluid for shaping the sheet material after drawing. The nozzles 25 are configured in such a way as to appropriately distribute the forming fluid inside the forming cavity, directing it from the bottom zone to the opening zone to obtain better and more rapid adhesion of the sheet material to the internal surfaces of the die 15. During operation, the first strip portion 3, and/or the second strip portion 4, and/or the third strip portion 5 are unwound from the respective reels by means of the moving means, and are advanced by a step in the advancing direction F, in such a way that they interact initially with the heating station 6.

Zones of the sheet material that have to be shaped are brought to a softening temperature in the heating station 6, and subsequently they are advanced by another step towards the forming station 10. The die 15 and the locking element 14 are then brought near one another. In this way each of the strip portions is locked between the die 15, the mould elements of which are in reciprocal contact, and the locking element 14. In particular, the sheet material is locked between the resting surfaces P and the operating surface 19 and between the abutting cavity 21 and the projecting portions 23.

With reference to the embodiment of the apparatus in Figures. 6 and 7, the punch-injector 24 is subsequently driven in the drawing direction B. The punch-injector 24, by moving to the bottom zone of the forming cavity 16, draws the sheet material. Once it has arrived near the bottom zone (as Figure 7 shows), the punch-injector 24 injects, through the nozzles 25, the forming fluid, directing the latter from bottom to top to progressively press the sheet material to the internal surfaces of the forming cavity 16 and obtain a container 2. Subsequently, the punch-injector 24 is extracted from the die 15.

The container 2 that has just been shaped is kept inside the die 15 for a cooling time that is such as to enable the shape to become stable. The locking element 14 is then moved away from the die 15 in a direction that is perpendicular to the advancing plane of the sheet material, so as to move the abutting cavity 21 away from the projecting portions 23. This enables the mould elements to move away from one another, moving in a direction that is transverse to the advancing direction of the sheet material (as shown in Figure 3) and disengaging the forming cavity 16 from the container 2 that has just been shaped. At this point, the sheet material can be advanced by a further step to a filling station (non shown), where the containers 2 suspended to the sheet material are filled with a product. At the end of filling, the containers 2 can be taken to a welding station where they are welded with a film of thermoformable material and lastly they can be conveyed to a cutting station where they are separated from the sheet material that supports them. Alternatively to the film of thermoformable material, it is possible to seal the filled containers by means of cover elements.

## Claims

1. Apparatus comprising mould means (11; 12; 13) suitable for forming containers (2) from a thermoformable sheet material comprising a plurality of continuous longitudinal strips (3; 4; 5) that are distinct from one another, moving means suitable for moving said thermoformable sheet material to said mould means (11, 12, 13), whereby said mould means (11; 12; 13) comprises forming devices (11; 12; 13), each of which is suitable for interacting respectively with a continuous longitudinal strip of said plurality of continuous longitudinal strips (3; 4; 5) and can be so configured as to shape a given type of container, **characterized in that** production lines for different products are obtained, and that said apparatus being configured so that a production speed of each production line can be controlled independently of the other production lines to meet determined production needs.

2. Apparatus according to claim 1, wherein each continuous longitudinal strip of said plurality of continuous longitudinal strips (3; 4; 5) is wound on a respective reel.

3. Apparatus according to claim 1, and further comprising supporting means suitable for supporting a reel (100) from which said plurality of continuous longitudinal strips (3; 4; 5) is obtainable.

4. Apparatus according to any one of claims 1 to 3, wherein said moving means is shaped so as to advance the continuous longitudinal strips of said plurality of continuous longitudinal strips (3; 4; 5) on a same advancing plane in an advancing direction (F).

5. Apparatus according to claim 3, or according to claim 4 as appended to claim 3, and further comprising cutting means (101) arranged for cutting said sheet material longitudinally to obtain said continuous longitudinal strips (3; 4; 5).

6. Apparatus according to claim 3, or according to claim 4 as appended to claim 3, or according to claim 5, and further comprising spacer means (102, 103) arranged for reciprocally spacing said continuous longitudinal strips (3; 4; 5).

7. Apparatus according to claim 6, as appended to claim 3, wherein said spacer means (102, 103) is shaped for reciprocally spacing said continuous longitudinal strips (3; 4; 5) in a direction that is transverse to said advancing direction (F).

8. Apparatus according to any one of claims 1 to 7, wherein said forming devices (11; 12; 13) are shaped to act independently of one another.

9. Apparatus according to claim 8, wherein said forming devices (11; 12; 13) are aligned on one another transversely to said advancing direction (F).

10. Apparatus according to any one of claims 1 to 9 , wherein each of said forming devices (11; 12; 13) comprises die elements (17, 18) that are reciprocally movable transversely to said advancing direction (F) from a contact position, wherein they define a moulding cavity (16), to a reciprocal moved away position.

11. Apparatus according to claim 10, wherein said die elements (17, 18) occupy, in said reciprocal moved away position, zones that are not occupied by said continuous longitudinal strips (3; 4; 5).

12. Apparatus according to claim 10 or 11, and further comprising locking means (14) suitable for stopping said undeformed sheet material on said die elements (17;18) in an operating position.

13. Apparatus according to claim 12, wherein said locking means (14) comprises an operating surface (19) suitable for interacting with resting surfaces (P) of said die elements (17, 18) in order to lock the sheet material in between operating surface (19) and resting surface (A).

14. Apparatus according to claim 12 or 13, and further comprising holding means (21; 23) interposed between said locking means (14) and said die elements (17;18) for reciprocally immobilising said die elements (17;18) in said operating position.

15. Apparatus according to claim 14, as appended to claim 12, wherein said holding means comprises abutting cavity means (21) obtained on said operating surface (19).

16. Apparatus according to claim 15, wherein said holding means comprises projecting portions (23) projecting transversely from said resting surfaces (P), and configured in such a way as to couple with said abutting cavity means (21).

17. Apparatus according to claim 16, wherein said projecting portions (23) surround an opening zone of said forming cavity (16).

18. Apparatus according to any one of claims 10 to 17, and further comprising punch means (24) that is movable from an opening zone of said forming cavity (16) to a bottom zone of said forming cavity (16) to draw said sheet material.

19. Apparatus according to claim 18, wherein on said punch means (24) injecting means is obtained that is suitable for injecting a forming fluid inside said forming cavity (16).

20. Apparatus according to claim 19, wherein said injecting means comprises nozzles (25) shaped in such a way as to act from said bottom zone.

21. Apparatus according to claim 20, wherein said nozzles (25) are positioned in such a way as to direct said forming fluid from said bottom zone to said opening zone.

22. Method comprising moving a sheet material, said moving comprising advancing a plurality of continuous longitudinal strips (3; 4; 5) of said sheet material, that are distinct from one another, to mould means (11; 12; 13) for thermoforming containers (2) by using an apparatus as defined in one of the claims 1-21, thermoforming each continuous longitudinal strip of said plurality of continuous longitudinal strips (3; 4; 5) so as to shape a given type of container, **characterized in that** production lines for different products are obtained, further comprising controlling a production speed of each production line independently of the other production lines to meet determined production needs.

23. Method according to claim 22, and further comprising unwinding each continuous longitudinal strip of said plurality of continuous longitudinal strips (3; 4; 5) from a respective reel.

24. Method according to claim 22, and further comprising unwinding said sheet material from a reel (100) from which said plurality of continuous longitudinal strips (3; 4; 5) is obtainable.

25. Method according to any one of claims 22 to 24, wherein said advancing comprises indexing continuous longitudinal strips of said plurality of continuous longitudinal strips (3; 4; 5) on a same advancing plane in an advancing direction (F).

26. Method according to claim 24, or according to claim 25 as appended to claim 24, and further comprising cutting said sheet material longitudinally to obtain said continuous longitudinal strips (3; 4; 5).

27. Method according to claim 24, or according to claim 25 as appended to claim 24, or according to claim 26, and further comprising reciprocally spacing said continuous longitudinal strips (3; 4; 5).

28. Method according to claim 27, as appended to claim 25, wherein said spacing comprises reciprocally spacing said continuous longitudinal strips (3; 4; 5) in a direction that is transverse to said advancing direction (F).

29. Method according to any one of claims 22 to 28, and further comprising shaping continuous longitudinal strips (3; 4; 5) of said plurality of continuous longitudinal strips independently of one another through said mould means (11; 12; 13).

30. Method according to claim 29, wherein said shaping comprises shaping said continuous longitudinal strips (3; 4; 5) by means of respective distinct forming devices (11; 12; 13) with which said mould means is provided.

31. Method according to claim 30, wherein before said shaping there is provided arranging die elements (17, 18) of said forming devices (11; 12; 13) in a reciprocal contact position wherein a forming cavity (16) is defined.

32. Method according to claim 31, as claim 29 is appended to claim 25 wherein after said shaping there is provided moving said die elements (17, 18) away from one another transversely to said advancing direction (F).

33. Method according to claim 32, wherein said moving away comprises arranging said die elements (17, 18) in zones that are not affected by said continuous longitudinal strips (3; 4; 5).

34. Method according to any one of claims 31 to 33, and further comprising moving punch means (24) from an opening zone of said forming cavity (16) to a bottom zone of said forming cavity (16) to draw said sheet material.

35. Method according to claim 34, wherein after said moving there is provided introducing a forming fluid inside said forming cavity (16) for shaping said sheet material.

36. Method according to claim 35, wherein said introducing comprises distributing said forming fluid from said bottom zone using said punch means (24).

37. Method according to claim 36, wherein said distributing comprises directing said forming fluid from said bottom zone to said opening zone by means of nozzles obtained on said punch means.

38. Method according to any one of claims 34 to 37, wherein, before said moving, there is provided locking said undeformed sheet material on said die elements (17, 18) by locking elements (14).

39. Method according to any one of claims 22 to 38, wherein there is provided bringing said undeformed sheet material to a softening temperature.

40. Method according to any one of claims 22 to 39, wherein there is provided separating said containers (2) from said sheet material.

41. Method according to any one of claims 22 to 40, wherein there is provided filling said containers (2) with a product.

42. Method according to claim 41, wherein, after said filling, there is provided closing said containers (2) through closing elements.

## Patentansprüche

1. Vorrichtung, aufweisend Formmittel (11; 12; 13), die zur Formung von Behältern (2) aus einem thermoformbaren Folienmaterial mit einer Vielzahl an kontinuierlichen, länglichen, voneinander getrennten Bändern (3; 4; 5) geeignet sind, ferner aufweisend Bewegungsmittel, die geeignet sind, das thermoformbare Folienmaterial zu den Formmitteln (11; 12; 13) zu bewegen, wobei die Formmittel (11; 12; 13) Formvorrichtungen (11; 12; 13) aufweisen, von denen jede dazu geeignet ist, jeweils mit einem kontinuierlichen länglichen Band der Vielzahl an kontinuierlichen länglichen Bändern (3; 4; 5) in Wechselwirkung zu treten und welche derart ausgebildet sein können, dass sie einen vorgegebenen Behältertyp formen, **dadurch gekennzeichnet, dass** Produktionslinien für unterschiedliche Produkte gewonnen werden, und dass die Vorrichtung derart ausgebildet ist, dass die Produktionsgeschwindigkeit jeder Produktionslinie unabhängig von den anderen Produktionslinien gesteuert werden kann, um vorbestimmte Produktionsbedürfnisse zu erfüllen.

2. Vorrichtung nach Anspruch 1, in welcher jedes kontinuierliche längliche Band der Vielzahl an kontinuierlichen länglichen Bändern (3; 4; 5) jeweils auf einer Rolle aufgewickelt ist.

3. Vorrichtung nach Anspruch 1, die ferner Trägermittel aufweist, die dazu geeignet sind, eine Rolle (100) zu tragen, von welcher die Vielzahl an kontinuierlichen länglichen Bändern (3; 4; 5) beziehbar ist.

4. Vorrichtung nach einem der Ansprüche 1 bis 3, in welcher die Bewegungsmittel derart ausgebildet sind, dass sie die kontinuierlichen länglichen Bänder der Vielzahl an kontinuierlichen länglichen Bändern (3; 4; 5) auf einer gleichen Vorschubsebene in eine Vorschubsrichtung (F) vorschieben.

5. Vorrichtung nach Anspruch 3, oder nach Anspruch 4, wenn abhängig von Anspruch 3, wobei diese ferner Schneidemittel (101) aufweist, die zum länglichen Schneiden des Folienmaterials angeordnet sind, um die kontinuierlichen länglichen Bänder (3; 4; 5) zu gewinnen.

6. Vorrichtung nach Anspruch 3, oder nach Anspruch 4, wenn abhängig von Anspruch 3, oder nach Anspruch 5, wobei diese ferner Abstandsmittel (102, 103) aufweist, die derart angeordnet sind, dass sie die kontinuierlichen länglichen Bänder (3; 4; 5) jeweils voneinander in Abständen anordnen.

7. Vorrichtung nach Anspruch 6, sofern abhängend von Anspruch 3, in welcher die Abstandsmittel (102, 103) zum gegenseitigen Abstandshalten der kontinuierlichen länglichen Bänder (3; 4; 5) in einer Richtung angeordnet sind, die quer zu der Vorschubsrichtung (F) ist.

8. Vorrichtung nach einem der Ansprüche 1 bis 7, in welcher die Formvorrichtungen (11; 12; 13) ausgebildet sind, um unabhängig voneinander zu wirken.

9. Vorrichtung nach Anspruch 8, in welcher die Formvorrichtungen (11; 12; 13) mit Bezug zueinander quer zu der Vorschubsrichtung (F) ausgerichtet sind.

10. Vorrichtung nach einem der Ansprüche 1 bis 9, in welcher jede der Formvorrichtungen (11; 12; 13) Ausformelemente (17, 18) aufweist, die quer zur Vorschubsrichtung (F) von einer Kontaktstellung, in welcher diese einen Formhohlraum (16) definieren, in eine Stellung gegeneinander verschiebbar sind, in welcher sie reziprok voneinander entfernt sind.

11. Vorrichtung nach Anspruch 10, in welche die Elemente (17, 18) in der reziprok voneinander wegbewegten Stellung Bereiche einnehmen, die nicht von den kontinuierlichen länglichen Bändern (3; 4; 5) eingenommen sind.

12. Vorrichtung nach Anspruch 10 oder 11, die ferner Feststellmittel (14) aufweist, die dazu geeignet sind, ungeformtes Folienmaterial auf den Ausformelementen (17; 18) in einer Betriebsstellung festzuhalten.

13. Vorrichtung nach Anspruch 12, in welcher die Feststellmittel (14) eine Betriebsoberfläche (19) aufweisen, die dazu geeignet ist, mit ruhenden Oberflächen (P) der Ausformelemente (17, 18) in Wechselwirkung zu treten, um das Folienmaterial zwischen der Betriebsoberfläche (19) und der ruhenden Oberfläche (P) festzuhalten.

14. Vorrichtung nach Anspruch 12 oder 13, die ferner Haltemittel (21; 23) aufweist, die zwischen den Feststellmitteln (14) und den Ausformmitteln (17; 18) angeordnet sind, zur gegenseitigen Immobilisierung der Ausformelemente (17; 18) in der Betriebsstellung.

15. Vorrichtung nach Anspruch 14, sofern abhängig von Anspruch 12, in welchem die Haltemittel aneinanderstoßende Hohlraummittel (21) aufweisen, die auf der Betriebsoberfläche (19) erhalten werden.

16. Vorrichtung nach Anspruch 15, in welcher die Haltemittel vorstehende Abschnitte (23) aufweisen, die quer von den ruhenden Oberflächen (P) vorstehen, und die derart ausgebildet sind, dass sie sich mit den aneinanderstoßenden Hohlraummitteln (21) verbinden.

17. Vorrichtung nach Anspruch 16, in welcher die vorstehenden Abschnitte (23) einen Öffnungsbereich des Formhohlraumes (16) umgeben.

18. Vorrichtung nach einem der Ansprüche 10 bis 17, die ferner Stanzmittel (24) aufweist, die von einem Öffnungsbereich des Formhohlraumes (16) zu einem Bodenbereich des Formhohlraumes (16) bewegbar sind, um das Folienmaterial tiefzuziehen.

19. Vorrichtung nach Anspruch 18, in welcher auf den Stanzmitteln (24) Einpressmittel vorliegen, die zum Einpressen eines Formfluids ins Innere des Formhohlraumes (16) geeignet sind.

20. Vorrichtung nach Anspruch 19, in welcher die Einpressmittel Düsen (25) aufweisen, die derart geformt sind, dass sie von dem Bodenbereich aus wirken.

21. Vorrichtung nach Anspruch 20, in welcher die Düsen (25) derart positioniert sind, dass sie das Formfluid aus dem Bodenbereich zu dem Öffnungsbereich leiten.

22. Verfahren, umfassend die Bewegung eines Folienmaterials, wobei die Bewegung das Vorschieben einer Vielzahl an kontinuierlichen länglichen, voneinander unterschiedlichen Bändern (3; 4; 5) des Folienmaterials zu Formmitteln (11; 12; 13) zum Thermoformen von Behältern (2) umfasst, und zwar unter Verwendung einer Vorrichtung wie in einem der Ansprüche 1 bis 21 definiert, wobei das Verfahren ferner das Thermoformen jedes kontinuierlichen länglichen Bands der Vielzahl an kontinuierlichen länglichen Bändern (3; 4; 5) umfasst, so dass ein vorgegebener Behältertyp geformt wird, **dadurch gekennzeichnet, dass** Produktionslinien für unterschiedliche Produkte erzielt werden, und wobei das Verfahren ferner die Steuerung einer Produktionsgeschwindigkeit jeder Produktionslinie unabhängig von den anderen Produktionslinien umfasst, um vorbestimmte Produktionsbedürfnisse einzuhalten.

23. Verfahren nach Anspruch 22, das ferner das Abwickeln jedes kontinuierlichen länglichen Bandes der Vielzahl an kontinuierlichen länglichen Bändern (3; 4; 5) von jeweils einer Rolle umfasst.

24. Verfahren nach Anspruch 22, das ferner das Abwickeln des Folienmaterials von einer Rolle (100) umfasst, von welcher die Vielzahl an kontinuierlichen länglichen Bändern (3; 4; 5) erhältlich ist.

25. Verfahren nach einem der Ansprüche 22 bis 24, in welchem das Vorschieben ein Einordnen der kontinuierlichen länglichen Bänder der Vielzahl der kontinuierlichen länglichen Bänder (3; 4; 5) auf einer gleichen Vorschubsebene in einer Vorschubsrichtung (F) umfasst.

26. Verfahren nach Anspruch 24 oder nach Anspruch 25, sofern abhängig von Anspruch 24, das ferner das Längsschneiden des Folienmaterials umfasst, zur Gewinnung der länglichen kontinuierlichen Bänder (3; 4; 5).

27. Verfahren nach Anspruch 24 oder nach Anspruch 25, sofern abhängig von Anspruch 24, oder nach Anspruch 26, das ferner ein gegenseitiges Abstandshalten der kontinuierlichen länglichen Bänder (3; 4; 5) umfasst.

28. Verfahren nach Anspruch 27, sofern abhängig von Anspruch 25, in welchem das Abstandhalten das gegenseitige Abstandhalten der kontinuierlichen länglichen Bänder (3; 4; 5) in einer Richtung umfasst, die quer zu der Vorschubrichtung (F) ist.

29. Verfahren nach einem der Ansprüche 22 bis 28, das ferner das Ausformen kontinuierlicher länglicher Bänder (3; 4; 5) der Vielzahl an kontinuierlichen länglichen Bändern umfasst, und zwar unabhängig voneinander durch die Formmittel (11; 12; 13).

30. Verfahren nach Anspruch 29, in welchem das Ausformen die Formung der kontinuierlichen länglichen Bänder (3; 4; 5) mittels jeweiliger einzelner Formvorrichtungen (11; 12; 13) umfasst, mit welchem die Formmittel ausgestattet sind.

31. Verfahren nach Anspruch 30, in welchem vor der Ausformung die Anordnung der Ausformelemente (17, 18) der Formvorrichtungen (11; 12; 13) in eine gegenseitige Kontaktstellung vorgesehen ist, in welcher ein Formhohlraum (16) definiert wird.

32. Verfahren nach Anspruch 31, wenn Anspruch 29 von Anspruch 25 abhängt, in welchem nach der Ausformung eine Bewegung der Ausformelemente (17, 18) voneinander weg und quer zu der Vorschubrichtung (F) vorgesehen ist.

33. Verfahren nach Anspruch 32, in welchem die Wegbewegung die Anordnung der Ausformelemente (17, 18) in Bereichen umfasst, welche nicht von den kontinuierlichen länglichen Bändern (3; 4; 5) eingenommen sind.

34. Verfahren nach einem der Ansprüche 31 bis 33, das ferner eine Bewegung der Stanzmittel (24) von einem Öffnungsbereich des Formhohlraumes (16) zu einem Bodenbereich des Formhohlraumes (16) umfasst, um das Folienmaterial tiefzuziehen.

35. Verfahren nach Anspruch 34, in welchem nach der Bewegung eine Einführung eines Formfluids ins Innere des Formhohlraumes (16) vorgesehen ist, zur Ausformung des Folienmaterials.

36. Verfahren nach Anspruch 35, in welchem das Einführen die Verteilung des Formfluids aus dem Bodenbereich unter Einsatz der Stanzmittel (24) umfasst.

37. Verfahren nach Anspruch 36, in welchem das Verteilen das Leiten des Formfluids von dem Bodenbereich zu dem Öffnungsbereich umfasst, und zwar mittels der auf den Stanzmitteln vorgesehenen Düsen.

38. Verfahren nach einem der Ansprüche 34 bis 37, in welchem vor der Bewegung ein Festhalten des ungeformten Folienmaterials auf den Ausformelementen (17, 18) durch die Feststellelemente (14) vorgesehen ist.

39. Verfahren nach einem der Ansprüche 22 bis 38, in welchem vorgesehen ist, das ungeformte Folienmaterial auf eine weichmachende Temperatur zu bringen.

40. Verfahren nach einem der Ansprüche 22 bis 39, in welchem vorgesehen ist, die Behälter (2) von dem Folienmaterial zu trennen.

41. Verfahren nach einem der Ansprüche 22 bis 40, in welchem vorgesehen ist, die Behälter (2) mit einem Produkt zu befüllen.

42. Verfahren nach Anspruch 41, in welchem nach der Befüllung das Verschließen der Behälter (2) mittels Verschlusselementen vorgesehen ist.

## Revendications

1. Dispositif comprenant des moyens de moules (11 ; 12 ; 13) aptes à former des récipients (2) à partir d'un matériau thermoformable en feuille comprenant une pluralité de bandes longitudinales continues (3 ; 4 ; 5) distinctes les unes des autres, des moyens de déplacement aptes à amener ledit matériau thermoformable en feuille jusqu'auxdits moyens de moules (11, 12, 13), lesdits moyens de moules (11 ; 12 ; 13) comprenant des dispositifs de formage (11 ; 12 ; 13), dont chacun est apte à interagir respectivement avec une bande longitudinale continue de ladite pluralité de bandes longitudinales continues (3 ; 4 ; 5) et peut être configuré de manière à former un type donné de récipient, ***caractérisé en ce que*** des lignes de production pour différents produits sont obtenues, et ***en ce que*** ledit dispositif est configuré de telle sorte qu'une vitesse de production de chaque ligne de production puisse être contrôlée indépendamment des autres lignes de production afin de répondre à des besoins de production déterminés.

2. Dispositif selon la revendication 1, dans lequel chaque bande longitudinale continue de ladite pluralité de bandes longitudinales continues (3 ; 4 ; 5) est enroulée sur une bobine respective.

3. Dispositif selon la revendication 1, et comprenant en outre des moyens de support aptes à supporter une bobine (100) à partir de laquelle ladite pluralité de bandes longitudinales continues (3 ; 4 ; 5) peuvent être obtenues.

4. Dispositif selon l'une quelconque des revendications 1 à 3, dans lequel lesdits moyens de déplacement sont conformés de manière à faire avancer les bandes longitudinales continues de ladite pluralité de bandes longitudinales continues (3 ; 4 ; 5) sur un même plan de progression dans une direction (F) de progression.

5. Dispositif selon la revendication 3, ou selon la revendication 4 lorsqu'elle est dépendante de la revendication 3, et comprenant en outre des moyens coupants (101) prévus pour couper longitudinalement ledit matériau en feuille de manière à obtenir lesdites bandes longitudinales continues (3 ; 4 ; 5).

6. Dispositif selon la revendication 3, ou selon la revendication 4 lorsqu'elle est dépendante de la revendication 3, ou selon la revendication 5, et comprenant en outre des moyens d'espacement (102, 103) prévus pour espacer les unes des autres lesdites bandes longitudinales continues (3 ; 4 ; 5).

7. Dispositif selon la revendication 6 lorsqu'elle est dépendante de la revendication 3, dans lequel lesdits moyens d'espacement (102, 103) sont conformés pour espacer les unes des autres lesdites bandes longitudinales continues (3 ; 4 ; 5) dans une direction qui est transversale à ladite direction de progression (F).

8. Dispositif selon l'une quelconque des revendications 1 à 7, dans lequel lesdits dispositifs de formage (11 ; 12 ; 13) sont conformés de manière à agir indépendamment les uns des autres.

9. Dispositif selon la revendication 8, dans lequel lesdits dispositifs de formage (11 ; 12 ; 13) sont alignés entre eux transversalement à ladite direction de progression (F).

10. Dispositif selon l'une quelconque des revendications 1 à 9, dans lequel chacun desdits dispositifs de formage (11 ; 12 ; 13) comprend des éléments de matrice (17, 18) qui sont mobiles l'un par rapport à l'autre de manière transversale à ladite direction de progression (F), d'une position de contact dans laquelle ils définissent une cavité de moulage (16), jusqu'à une position où ils sont écartés l'un de l'autre.

11. Dispositif selon la revendication 10, dans lequel lesdits éléments de matrice (17, 18) occupent, dans ladite position écartés l'un de l'autre, des zones qui ne sont pas occupées par lesdites bandes longitudinales continues (3 ; 4 ; 5).

12. Dispositif selon la revendication 10 ou 11, et comprenant en outre des moyens de verrouillage (14) aptes à arrêter ledit matériau en feuille non déformé sur lesdits éléments de matrice (17 ; 18) dans une position opératoire.

13. Dispositif selon la revendication 12, dans lequel lesdits moyens de verrouillage (14) comprennent une surface opératoire (19) apte à interagir avec des surfaces d'appui (P) desdits éléments de matrice (17, 18) de manière à bloquer le matériau en feuille dans une surface opératoire (19) et une surface d'appui (P).

14. Dispositif selon la revendication 12 ou 13, et comprenant en outre des moyens de retenue (21 ; 23) interposés entres lesdits moyens de verrouillage (14) et lesdits moyens de matrice (17 ; 18) pour immobiliser entre eux lesdits éléments de matrice (17 ; 18) dans ladite position opératoire.

15. Dispositif selon la revendication 14, lorsqu'elle est dépendante de la revendication 12, dans lequel lesdits moyens de retenue comprennent des moyens de cavité d'aboutement (21) ménagés dans ladite surface opératoire (19).

16. Dispositif selon la revendication 15, dans lequel lesdits moyens de retenue comprennent des parties saillantes (23) dépassant transversalement desdites surfaces d'appui (P), et configurées de façon à s'accoupler avec lesdits moyens de cavité d'aboutement (21).

17. Dispositif selon la revendication 16, dans lequel lesdites parties saillantes (23) entourent une zone d'ouverture de ladite cavité de formage (16).

18. Dispositif selon l'une quelconque des revendications 10 à 17, et comprenant en outre des moyens de poinçon (24) qui sont mobiles d'une zone d'ouverture de ladite cavité de formage (16) jusqu'à une zone de fond de ladite cavité de formage (16) dans le but d'étirer ledit matériau en feuille.

19. Dispositif selon la revendication 18, dans lequel, sur lesdits moyens de poinçon (24), sont présents des moyens injecteurs qui sont aptes à injecter un fluide de formage à l'intérieur de ladite cavité de formage (16).

20. Dispositif selon la revendication 19, dans lequel lesdits moyens injecteurs comprennent des buses (25) conformées de manière à agir depuis la zone de fond.

21. Dispositif selon la revendication 20, dans lequel lesdites buses (25) sont positionnées de manière à diriger ledit fluide de formage de ladite zone de fond vers ladite zone d'ouverture.

22. Procédé comprenant le déplacement d'un matériau en feuille, ledit déplacement comprenant l'avancée d'une pluralité de bandes longitudinales continues (3 ; 4 ; 5) dudit matériau en feuille qui sont distinctes les unes des autres, jusqu'à des moyens de moules (11 ; 12 ; 13) pour le thermoformage de récipients (2), en utilisant un dispositif tel que défini dans l'une des revendications 1 à 21, le thermoformage de chaque bande longitudinale continue de ladite pluralité de bandes longitudinales continues (3 ; 4 ; 5) afin de former un type donné de récipient, ***caractérisé en ce que*** des lignes de production pour des produits différents sont présentes, et comprenant en outre le contrôle d'une vitesse de production de chaque ligne de production indépendamment des autres lignes de production, de manière à répondre à des besoins de production déterminés.

23. Procédé selon la revendication 22, et comprenant en outre le débobinage de chaque bande longitudinale continue de ladite pluralité de bandes longitudinales continues (3 ; 4 ; 5) à partir d'une bobine respective.

24. Procédé selon la revendication 22, comprenant en outre le débobinage dudit matériau en feuille depuis une bobine (100) à partir de laquelle ladite pluralité de bandes longitudinales continues (3 ; 4 ; 5) peuvent être obtenues.

25. Procédé selon l'une quelconque des revendications 22 à 24, dans lequel ladite progression comprend l'avancée par intermittence de bandes longitudinales continues de ladite pluralité de bandes longitudinales continues (3 ; 4 ; 5) sur un même plan de progression dans une direction (F) de progression.

26. Procédé selon la revendication 24, ou selon la revendication 25 lorsqu'elle est dépendante de la revendication 24, et comprenant en outre le découpage dudit matériau en feuille de manière longitudinale de manière à obtenir lesdites bandes longitudinales continues (3 ; 4 ; 5).

27. Procédé selon la revendication 24, ou selon la revendication 25 lorsqu'elle est dépendante de la revendication 24, ou selon la revendication 26, et comprenant en outre l'écartement réciproque desdites bandes longitudinales continues (3 ; 4 ; 5).

28. Procédé selon la revendication 27 lorsqu'elle est dépendante de la revendication 25, dans lequel ledit écartement comprend l'écartement réciproque desdites bandes longitudinales continues (3 ; 4 ; 5) dans une direction qui est transversale à ladite direction de progression (F).

29. Procédé selon l'une quelconque des revendications 22 à 28, et comprenant en outre la mise en forme des bandes longitudinales continues (3 ; 4 ; 5) de ladite pluralité de bandes longitudinales continues indépendamment les unes des autres avec lesdits moyens de moules (11 ; 12 ; 13).

30. Procédé selon la revendication 29, dans lequel le formage comprend la mise en forme desdites bandes longitudinales continues (3 ; 4 ; 5) au moyen de dispositifs de formage distincts respectifs (11 ; 12 ; 13) dont sont pourvus lesdits moyens de moules.

31. Procédé selon la revendication 30, dans lequel, avant ladite mise en forme, il est procédé à une mise en place d'éléments de matrice (17 ; 18) desdits dispositifs de formage (11 ; 12 ; 13) dans une position de contact réciproque dans laquelle une cavité de formage (16) est définie.

32. Procédé selon la revendication 31 lorsque la revendication 29 est dépendante de la revendication 25, dans lequel, après ladite mise en forme, il est procédé à l'éloignement les uns des autres desdits éléments de matrice (17, 18) de manière transversale à ladite direction de progression (F).

33. Procédé selon la revendication 32, dans lequel ledit éloignement comprend le positionnement desdits éléments de matrice (17, 18) dans des zones qui ne sont pas affectées par lesdites bandes longitudinales continues (3 ; 4 ; 5).

34. Procédé selon l'une quelconque des revendications 31 à 33, et comprenant en outre le déplacement de moyens de poinçon (24) d'une zone d'ouverture de ladite cavité de formage (16) jusqu'à une zone de fond de ladite cavité de formage (16) afin d'étirer ledit matériau en feuille.

35. Procédé selon la revendication 34, dans lequel, après ledit déplacement, il est procédé à l'introduction d'un fluide de formage à l'intérieur de ladite cavité de formage (16) afin de réaliser le formage dudit matériau en feuille.

36. Procédé selon la revendication 35, dans lequel ladite introduction comprend la distribution dudit fluide de formage depuis ladite zone de fond en utilisant lesdits moyens de poinçon (24).

37. Procédé selon la revendication 36, dans lequel ladite distribution comprend l'envoi dudit fluide de formage de ladite zone de fond vers ladite zone ouverte au moyen de buses ménagées sur lesdits moyens de poinçon.

38. Procédé selon l'une quelconque des revendications 34 à 37, dans lequel, après ledit déplacement, il est procédé au blocage dudit matériau en feuille non déformé sur lesdits éléments de matrice (17, 18) par des moyens de blocage (14).

39. Procédé selon l'une quelconque des revendications 22 à 38, dans lequel il est prévu de porter ledit matériau en feuille non déformé à une température de ramollissement.

40. Procédé selon l'une quelconque des revendications 22 à 39, dans lequel il est procédé à la séparation desdits récipients (2) dudit matériau en feuille.

41. Procédé selon l'une quelconque des revendications 22 à 40, dans lequel il est procédé au remplissage desdits récipients (2) avec un produit.

42. Procédé selon la revendication 41, dans lequel, après ledit remplissage, il est procédé à la fermeture desdits récipients (2) au moyen d'éléments de fermeture.
